# EUROPEAN PATENT SPECIFICATION

(11) **EP 0 373 293 B1**
(45) Date of publication and mention of the grant of the patent: **12.04.1995**
(21) Application number: 89114133.5
(22) Date of filing: 31.07.1989
(51) Int. Cl.: B29C 45/28

(54) **Injection molding rack and pinion valve pin actuating mechanism**
Zahnstangenbetätigungsmechanismus für Spritzgiessventilnadel
Mécanisme de commande à crémaillère pour l'aiguille d'obturateur de moulage par injection

(30) Priority: 16.12.1988 CA 586166
(43) Date of publication of application: 20.06.1990
(73) Proprietor: Gellert, Jobst Ulrich, Georgetown Ontario L7G 2X1 (CA)
(72) Inventor: Gellert, Jobst Ulrich, Georgetown Ontario L7G 2X1 (CA)
(74) Representative: Grünecker, Kinkeldey, Stockmair & Schwanhäusser Anwaltssozietät

(56) References cited:
- EP-A- 0 099 088
- DE-C- 931 677
- FR-A- 2 237 750
- GB-A- 2 085 350

## Description

This invention relates generally to injection molding and more particularly to a valve gated hot runner injection molding apparatus as indicated in the preamble of claim 1.

Valve gated injection molding apparatus systems are well known in the art, as are the related problems of valve pin actuating mechanisms. Actuating mechanisms are usually either lever operated or piston operated. A lever operated mechanism is shown in the applicant's US patent number 4,222,733 which issued September 16, 1980. While this arrangement is satisfactory for many applications, it has the disadvantage that the lever unavoidably applied a lateral force to the reciprocating valve pin which causes friction, uneven wear and a larger gap on one side than the other. As a result, during the operating life of the system there is an uneven buildup of melt deposits around the valve pin which can cause leakage and malfunction. Other examples of lever operated valve pin mechanisms having similar problems are shown in the following brochures; Incoe "SVG 5000, SVG 7000", H. Muller Mekaniska AB "Flytgot Typ N" and "Precusion Products GmbH Delta" Spritzduse Mit Hydraulicverschluss.

Actuating mechanisms having a piston connected directly to the valve pin have been used to overcome these problems associated with lever operated mechanisms. Examples of such piston operated mechanisms are shown in U.S. patent numbers 4,380,426 to Wiles which issued April 19, 1983, 4,433,969 to the applicant which issued February 24, 1984 and corresponds to EP-A-0 099 088, upon which the preamble of claim 1 is based, and 4,755,131 to Schmidt which issued July 5, 1988. While these piston operated systems do reduce the lateral forces applied to the valve pin they have the disadvantage that they are relatively costly to make and require a considerable amount of space around the valve pin head to which the piston is connected. This is particularly a problem in providing for the melt passage in a center entry single nozzle system as described in U.S. patent number 4,380,426 referred to above. Also, many of the piston operated systems are hydraulically driven which has the additional problems of hot seals and continuing to circulate the oil for cooling after shut down. Furthermore, in a stack molding configuration the additional height required for the actuating mechanism is a considerable disadvantage.

Accordingly, it is an object of the invention to at least partially overcome the problems of the prior art by providing a hot runner injection molding apparatus having an improved pneumatically driven valve pin actuating mechanism.

In order to perform said objective, the present invention provides a valve gated hot runner injection molding apparatus as indicated in the preamble of claim 1 which is characterised in that a rack member is longitudinally slidably received in an opening in the manifold to engage the driven end of the valve pin, the rack member having a toothed portion with a longitudinal row of teeth which face outwardly in the radial opening, a pivotally mounted pinion member with a plurality of teeth which engage the teeth of the rack member, and double acting pneumatic actuating means connected to pivot the pinion member through a predetermined angle according to a predetermined cycle whereby the rack member and the valve pin are reciprocated longitudinally between the open and closed positions, said rack member having an inward surface which abuts against a matching surface of the radial opening in the manifold or against a matching surface of the rearwardly extending portion of the valve pin bushing to retain the rack member in longitudinal alignment with the valve pin and absorb lateral forces received from the pinion member as the rack member and valve pin are reciprocated between the open and closed positions.

Preferred embodiments of the present invention are laid down in the further subclaims.

In the following the present invention is explained in greater detail by means of several embodiments thereof in conjunction with the accompanying drawings, wherein:
Figure 1 is a sectional view of a portion of an injection molding system according to one embodiment of the invention showing the melt flow passage,
Figure 2 is a sectional view taken along line 2-2 in Figure 1 showing the actuating mechanism with the valve pin in the closed position,
Figure 3 is a similar view to Figure 2 showing the valve pin in the open position,
Figure 4 is a cut-away isometric view showing how the rack member is received in the manifold,
Figure 5 is a sectional view of a portion of an injection molding system according to a second embodiment of the invention, and
Figure 6 is a cut-away isometric view showing how the rack member in Figure 5 abuts against the valve pin bushing.

### DETAILED DESCRIPTION OF THE DRAWINGS

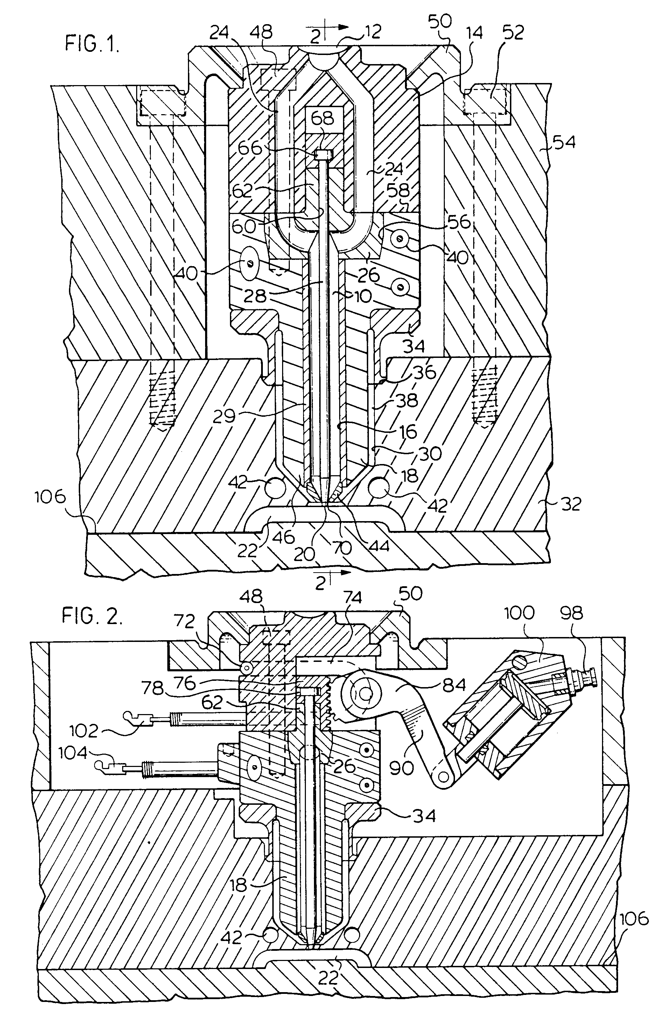

Reference is first made to Figure 1 which shows a valve gated injection molding system having a melt passage 10 which extends from a central inlet 12 in a manifold 14, through a central bore 16 of a nozzle 18 and a gate 20 to a cavity 22. As can be seen, in this

### BRIEF DESCRIPTION OF THE DRAWINGS

Figure 1 is a sectional view of a portion of an injection molding system according to one embodiment of the invention showing the melt flow passage,
Figure 2 is a sectional view taken along line 2-2 in Figure 1 showing the actuating mechanism with the valve pin in the closed position,

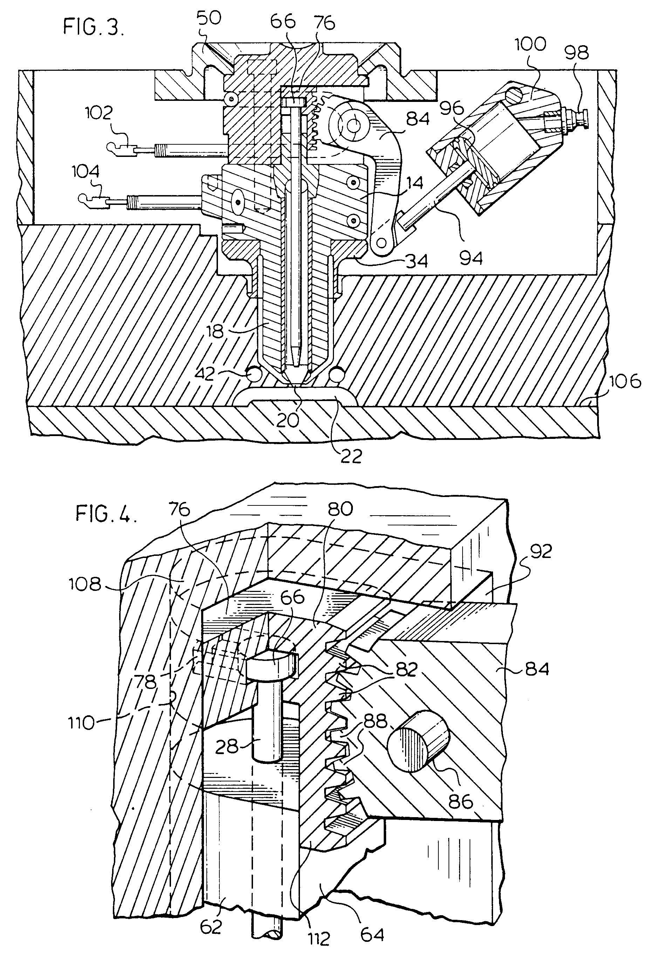

Figure 3 is a similar view to Figure 2 showing the valve pin in the open position,
Figure 4 is a cut-away isometric view showing how the rack member is received in the manifold,

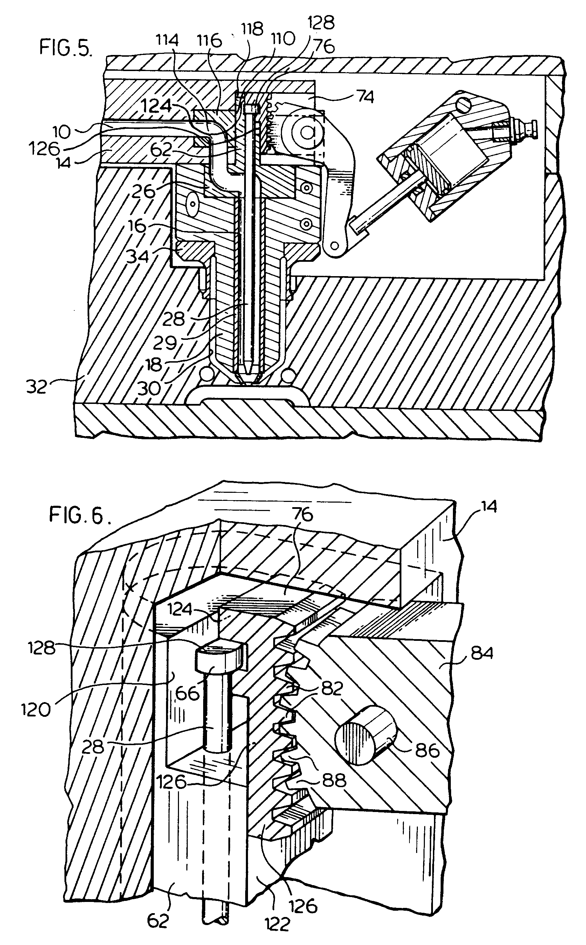

Figure 5 is a sectional view of a portion of an injection molding system according to a second embodiment of the invention, and
Figure 6 is a cut-away isometric view showing how the rack member in Figure 5 abuts against the valve pin bushing.

### DETAILED DESCRIPTION OF THE DRAWINGS

Reference is first made to Figure 1 which shows a valve gated injection molding system having a melt passage 10 which extends from a central inlet 12 in a manifold 14, through a central bore 16 of a nozzle 18 and a gate 20 to a cavity 22. As can be seen, in this embodiment the melt passage 10 branches from the central inlet 12 into two channels 24 around the valve pin actuating mechanism, rejoins in a valve pin bushing 26 which is seated in the nozzle 18, and extends along the valve pin 28 in the central bore 16 which is considerably larger in diameter than the valve pin 28. The central bore 16 extends through a stainless steel liner 29 similar to that shown in the applicant's U.S. patent number 4,451,974 which issued June 5, 1984.

The nozzle 18 is seated in a well 30 in the cavity plate 32 by an insulation flange or bushing 34 which abuts against a circumferential shoulder 36. This accurately locates the nozzle 18 with the central bore 16 in alignment with the gate 20 and provides an insulative air space 38 between the nozzle 18 and the surrounding cavity plate 32. The nozzle 18 has an electrical heating element 40 which is integrally cast into it and the cavity plate 32 is cooled by pumping cooling water through cooling conduits 42. An injection molding nozzle seal 44 as described in the applicant's U.S. patent number 4,286,941 which issued September 1, 1981 is seated in the nose portion 46 of the nozzle 18 and bridges the air space 38 around the gate 20 to prevent the air space 38 filling with melt.

The manifold 14 is secured in correct alignment to the nozzle 18 by bolts 48. The nozzle 18 and manifold 14 are in turn held in place by a locating ring 50 which is secured by bolts 52 extending through the support plate 54 into the cavity plate 32.

The valve pin busing 26 is securely seated in an opening 56 in the rear face 58 of the nozzle 18 and has a valve pin bore 60 extending therethrough in alignment with the central bore 16 through the nozzle 18. As described in U.S. patent number 4,433,969, the valve pin bore 60 which extends into a rearwardly projecting portion 62 is of sufficient length and fits snugly enough around the valve pin 28 to seal against leakage of the pressurized melt around the valve pin 28 as it reciprocates. As can be seen, the valve pin bushing 26 is shaped to connect the two channel 24 of the melt passage 10 to the central bore 16 through the nozzle 18. The valve pin bushing 26 and the opening 56 in which it is seated in the nozzle 18 are oblong shaped to accurately align it, and the rearwardly projecting portion 62 has an outwardly facing flat surface 64.

The elongated valve pin 28 has an enlarged head 66 at the driven end 68 and a tip end 70 which seats in the gate 20 in the forward closed position. The manifold 14 is heated by an electrical heating element 72 which is integrally brazed into it. The manifold 14 is made with a slot or radial opening 74 which receives the rearwardly projecting portion 62 of the valve pin bushing 26 and the rack member 76. The rack member 76 has a T-slot 78 which engages the enlarged head 66 of the valve pin 28 and a toothed portion 80 with a row of outwardly facing teeth 82. The slot 74 in the manifold 14 extends radially outward to receive the pinion member 84 which is pivotally mounted on a pivot pin 86 which extends into the manifold 14 on opposite sides of the slot 74. The pinion member 84 also has teeth 88 which engage the teeth 82 of the rack member 76 and a pivot arm 90 which extends outwardly through the mouth 92 of the slot 74. The pivot arm 90 is connected by a rod 94 to a double-acting piston 96 which is driven by air received through hoses (not shown) to connectors 98 to reciprocate in a pivotally mounted cylinder 100. While the pivot arm 90 is curved in this embodiment to match the location of the cylinder 100 and piston 96, other suitable arrangements can be used to drive the pinion member 84.

In use, the system is assembled as shown and electrical power is applied to the terminals 102,104 of the heating elements 40,72 to heat the manifold 14 and the nozzle 18 to a predetermined operating temperature. Pressurized melt from a molding machine (not shown) is introduced into the melt passage 10 through the central inlet 12 according to a predetermined cycle and controlled pneumatic pressure is applied through the hoses to the connectors 98 to operate the piston 96 according to a matching cycle. When the piston 96 pivots the pinion member 84 to the open position shown in Figure 3, the rack member 76 and the valve pin 28 slide rearwardly to withdraw the tip end 70 from the gate 20. The pressurized melt flows through the melt passage 10 along the valve pin 28, through the gate 20 and fills the cavity 22. After the cavity is filled, injection pressure is held momentarily to pack and then the piston 96 pivots the pinion member 84 to the closed position shown in Figure 2. This causes the rack member 76 and the valve pin 28 to slide forwardly until the tip end 70 is seated in the matching gate 20. Injection pressure is then released and after a short cooling period, the mold is opened along the parting line 106 to eject the molded product. After ejection, the mold is closed, pneumatic pressure is applied to the cylinder 100 to withdraw the valve pin 28 to the open position, and injection pressure is reapplied to refill the cavity 22. This cycle is repeated continuously with a frequency dependent upon the size of cavity and type of material being molded.

As the valve pin 28 is reciprocated between the open and closed positions, the teeth 88 of the pinion member 84 engage and drive the teeth 82 of the rack member 76. While this unavoidably results in the application of some lateral force to the rack member 76, this lateral force is absorbed by contact between the inward surface 108 of the rack member 76 and the matching surface 110 of the radial opening or slot 74 in the manifold 14 against which it abuts as it slides. The shape of the slot 74 also keeps the rack member 76 and the pinion member 84 in place so the teeth 82,88 remain in alignment. Some of the lateral force applied to the rack member 76 is also absorbed by sliding contact between a flat inwardly facing surface 112 of the toothed portion 80 of the rack member 76 and the outwardly facing flat surface 64 of the rearwardly projecting portion 62 of the valve pin bushing 26. Thus, the rack member 76 travels along a substantially straight line as it reciprocates between the open and closed positions which avoids the application of lateral forces or stress to the driven end 68 of the valve pin 28. The relatively loose receipt or engagement of the enlarged head 66 of the valve pin 28 in the slot 78 in the rack member 76 further ensures that lateral forces are not transmitted to the valve pin 28 by the rack member 76. This allows the valve pin 28 to reciprocate in the center of the valve pin bore 60 through the valve pin bushing 26 without being displaced to one side. This avoids leakage and malfunction due to uneven wearing and displacement around the reciprocating valve pin 28. The double acting actuation of the valve pin allows the valve pin to be opened before injection pressure is applied which avoids a thin film of semicold plastic being injected when injection is initiated which is very advantageous for cosmetically clean gate marks with materials such as polycarbonates, ABS, polyvinyl chloride, and the like.

Figures 5 and 6 show an injection molding system according to another embodiment of the system. As many of the elements of this embodiment are the same as the first embodiment, elements common to both embodiments are described and illustrated using the same reference numerals. In this embodiment, the melt passage 10 branches from an inlet (not shown) in an elongated manifold 14 to a number of spaced nozzles 18 (only one of which is shown). Each nozzle 18 is seated in a well 30 in the cavity plate 32 with a structure as described above. In this case, the melt passage 10 has a bend 114 in the manifold 14 before extending into the valve pin bushing 26 where it connects to the central bore 16 around the valve pin 28. The bend 114 is made by suitably machining a plug 116 which is brazed in place in the manifold 14 as described in U.S. patent number 4,609,138 to Harrison which issued September 2, 1986.

The use of an elongated manifold 14 provides the additional problem in this embodiment of misalignment due to thermal expansion. While the nozzle 18 is accurately located in the well 30 by the insulation flange 34, the manifold expands and contracts longitudinally from where it is located in alignment with the central inlet (not shown). Thus it is not satisfactory to have the rack member 76 abut against the surface 110 of the slot 74 in the manifold 14. Rather, the valve pin bushing 26 has a different configuration with the rearwardly projecting portion 62 extending further into the slot 74 and having a space 118 between it and the surface 110 of the slot 74. As clearly seen in Figure 6, the rearwardly projecting portion 62 of the valve pin bushing 26 has a rearward outwardly facing flat surface 120 and a forward outwardly facing flat surface 122. The rack member 76 also has a rearwardly inwardly facing flat surface 124 and a forward inwardly facing flat surface 126. As shown, the flat surfaces 124,126 of the rack member 76 abut against the flat surfaces 120,122 of the rearwardly projecting portion 62 of the valve pin bushing 26 as the rack member 76 and valve pin 28 are reciprocated by the pivotal action of the pinion member 84. Thus, substantially all of the lateral forces applied by the pinion member 84 to the rack member 76 are absorbed by the valve pin bushing 26 and not by the valve pin 28. As mentioned above, the valve pin 28 has an enlarged head 66 which is loosely received in a T-slot 78 on the rack member 76 which further ensures that lateral forces are not transferred to the valve pin 28 by the rack member 76. While the surfaces 120,122 of the valve pin bushing 26 and 124,126 of the rack member 76 are shown as being flat in this embodiment, they can have other shapes which match sufficiently to provide for the reciprocal sliding motion of the rack member 76. The head 66 of the valve pin 28 is made with one flat side 128 which abuts against the rearward outwardly facing flat surface 120 of the valve pin bushing 26 to prevent the valve pin 28 from rotating as it reciprocates. The feature is useful if the valve pin tip end 70 is shaped to fit an angled cavity and/or to provide a textured finish.

The pinion member 84 and the remainder of the valve pin actuating mechanism is the same as described above in regard to the first embodiment. Similarly, operation of the system is the same and the description need not be repeated. The difference is that in this embodiment the lateral forces from the rack member 76 are absorbed entirely by the valve pin bushing 26, whereas in the first embodiment the lateral forces are split between the manifold 14 and the valve pin bushing 26. It is, of course, apparent that the first embodiment can also be modified to have all of the lateral forces absorbed only by the manifold in a system where misalignment due to thermal expansion is not a problem.

While the description of the injection molding system with a rack and pinion actuating mechanism has been given with respect to preferred embodiments, it is not to be construed in a limiting sense. Variations and modifications will occur to those skilled in the art. For instance, it is apparent that the shapes and/or configurations of the pinion member 84, rack member 86 and slot 74 in the manifold 14 can be varied without applying unacceptable lateral forces to the driven end 68 of the valve pin 28 as it reciprocates.

## Claims

1. A valve gated hot runner injection molding apparatus having a heated nozzle (18) which is seated in a cavity plate (32) and secured to a heated manifold (14), a pneumatically activated elongated valve pin (28) which reciprocates longitudinally between a retracted open position and a forward closed position in a central bore (16) in the nozzle (18) which is in alignment with a gate (20) extending through the cavity plate (32) to a cavity (22), the valve pin (28) having a driven end (68) and a tip end (70) which seats in the gate (20) in the closed position, a melt passage (10) to convey pressurized melt from an inlet (12) in the manifold (14) to the gate (20) which extends through the manifold (14) and along the valve pin (28) in the central bore (16) of the nozzle (18), and a valve pin bushing (26) which is seated in the nozzle (18) with a rearwardly extending portion (62) which projects into the manifold (14), the valve pin bushing (26) having a valve pin bore (60) extending therethrough in alignment with the central bore (16) of the nozzle (18) to receive the valve pin (28) therethrough to prevent substantial leakage of the pressurized melt around the reciprocating valve pin (28), characterized in that
(a) a rack member (76) is longitudinally slidably received in a radial opening (74) in the manifold (14) to engage the driven end (68) of the valve pin (28), the rack member (76) having a toothed portion (80) with a longitudinal row of teeth (82) which face outwardly in the radial opening (74);
(b) a pivotally mounted pinion member (84) with a plurality of teeth (88) which engage the teeth (82) of the rack member (76), and
(c) double acting pneumatic actuating means (96) are connected to pivot the pinion member (84) through a predetermined angle according to a predetermined cycle whereby the rack member (76) and the valve pin (28) are reciprocated longitudinally between the open and closed positions,
the rack member (76) having an inward surface (108,124,126) which abuts against a matching surface (110) of the radial opening (74) in the manifold (14) or against a matching surface (120,122) of the rearwardly extending portion (62) of the valve pin bushing (26) to retain the rack member (76) in longitudinal alignment with the valve pin (28) and absorb lateral forces received from the pinion member (84) as the rack member (76) and valve pin (28) are reciprocated between the open and closed positions.

2. An injection molding apparatus as claimed in claim 1 wherein the driven end (68) of the valve pin (28) has an enlarged head (66) which is centrally received in a matching slot (78) in the rack member (76).

3. An injection molding apparatus as claimed in claims 1 or 2 wherein the toothed portion (80) of the rack member (76) partially overlaps the rearwardly extending portion (62) of the valve pin bushing (26), the toothed portion (80) of the rack member (76) having an inwardly facing surface (124,126) which is in slidable bearing contact against a matching outwardly facing surface (120,122) of the rearwardly extending portion (62) of the valve pin bushing (26).

4. An injection molding apparatus as claimed in claim 3 wherein the matching surfaces (124,126;120,122) of the toothed portion of the rack member (76) and the rearwardly extending portion (62) of the valve pin bushing (26) are flat.

5. An injection molding apparatus as claimed in claim 2 wherein the said at least one inwardly facing surface (124,126) of the rack member (76) and the said at least one outwardly facing surface (120,122) of the rearward extending portion (62) of the valve pin bushing (26) match each other.

6. An injection molding apparatus as claimed in claim 2 wherein the said at least one inwardly facing surface (124,126) of the rack member (76) and the said at least one outwardly facing surface (120,122) of the rearward extending portion (62) of the valve pin bushing (26) are flat.

7. An injection molding apparatus as claimed in claim 2 wherein the rearward extending portion (62) of the valve pin bushing (26) has a rearward outwardly facing flat surface (120) and a forward outwardly facing flat surface (122) and the rack member (76) has a rearward inwardly facing flat surface (124) and a forward inwardly facing flat surface (126), the rearward inwardly facing flat surface (124) of the rack member (76) abutting against the rearward outwardly facing flat surface (120) of the valve pin bushing (26) and the forward inwardly facing flat surface (126) of the rack member (76) abutting against the forward outwardly facing flat surface (122) of the valve pin bushing (26) whereby substantially all of the lateral forces applied by the pinion member (84) to the rack member (76) are absorbed by the valve pin bushing (26) as the rack member (76) and the valve pin (28) are reciprocated between the open and closed positions.

8. An injection molding apparatus as claimed in claim 7 wherein the valve pin head (66) has one flat side (128) which abuts against the rearward outwardly facing flat surface (120) of the valve pin bushing (26), thus preventing rotation of the valve pin (28) as it reciprocates.

9. An injection molding apparatus as claimed in claim 2 wherein the pinion member (84) is pivotally mounted on the manifold (14).

10. An injection molding apparatus as claimed in claim 2 wherein the actuating means includes a piston (96) which reciprocates in a cylinder (100), the piston (96) being connected to the pinion member (84) by a connecting rod (94).

## Patentansprüche

1. Heißkanal-Spritzgießvorrichtung mit Ventil-Anschnittsteuerung, das eine beheizte Düse (18) aufweist, die in einer Formhohlraumplatte (32) sitzt und an einem beheizten Verteiler (14) befestigt ist, sowie einen pneumatisch betätigten langgestreckten Ventilstift (28) aufweist, der in Längsrichtung sich zwischen einer zurückgezogenen Offenstellung und einer vorderen Schließstellung in einer Mittelbohrung (16) in der Düse (18) hin- und herbewegt, wobei die Mittelbohrung in Ausrichtung mit einem Anschnitt (20) ist, der sich durch die Formhohlraumplatte (32) zu einem Formhohlraum (22) erstreckt, wobei der Ventilstift (28) ein angetriebenes Ende (68) und ein Spitzenende (70) aufweist, das in dem Anschnitt (20) in der Schließstellung einsitzt, und mit einem Schmelzekanal (10), um unter Druck stehende Schmelze von einem Einlaß (12) in dem Verteiler (14) zu dem Anschnitt (20), der sich durch den Verteiler (14) erstreckt, und entlang des Ventilstiftes (28) in der Mittelbohrung (16) der Düse (18) zu fördern, sowie mit einer Ventilstifthülse (26), die in die Düse (18) eingesetzt ist und mit einem nach rückwärts sich erstreckenden Abschnitt (62) in den Verteiler (14) vorspringt, wobei die Ventilstifthülse (26) eine Ventilstiftbohrung (60) aufweist, die sich durch diese hindurch in Ausrichtung mit der Mittelbohrung (16) der Düse (18) erstreckt, um den Ventilstift (28) hierdurch aufzunehmen und eine wesentliche Leckage von unter Druck stehender Schmelze rund um den sich hin- und herbewegenden Ventilstift (28) zu vermeiden,
**dadurch gekennzeichnet,** daß
(a) ein Zahnstangenteil (76) in Längsrichtung gleitbar in einer radialen Öffnung (74) in dem Verteiler (14) aufgenommen ist, um in Eingriff zu sein mit dem angetriebenen Ende (68) des Ventilstiftes (28), wobei das Zahnstangenteil (26) einen verzahnten Abschnitt (80) mit einer Längsreihe von Zähnen (82) aufweist, die in der radialen Öffnung (74) nach außen weisen;
(b) ein drehbar gelagertes Ritzelteil (84) mit einer Mehrzahl von Zähnen (88) vorgesehen ist, die mit den Zähnen (82) des Zahnstangenteiles (76) in Eingriff sind, und
(c) eine doppelt wirkende pneumatische Betätigungseinrichtung (96) verbunden ist, um das Ritzelteil (84) über einen vorgegebenen Winkel entsprechend einem vorgegebenen Zyklus zu drehen, wodurch das Zahnstangenteil (76) und der Ventilstift (28) in Längsrichtung zwischen der Offen- und Schließstellung hin- und hergehend bewegbar sind,
wobei das Zahnstangenteil (76) eine einwärts gewandte Oberfläche (108,124, 126) aufweist, die gegen eine Gegenfläche (110) der radialen Öffnung (74) in dem Verteiler (14) oder gegen eine Gegenfläche (120, 122) des sich nach hinten erstreckenden Abschnittes (62) der Ventilstifthülse (26) anliegt, um das Zahnstangenteil (76) in Längsausrichtung mit dem Ventilstift (28) zu halten und Seitenkräfte aufzunehmen, die von dem Ritzelteil (84) empfangen werden, wenn das Zahnstangenteil (76) und der Ventilstift (28) zwischen der Offen- und Schließstellung hin- und hergehend bewegt werden.

2. Spritzgießvorrichtung nach Anspruch 1, bei der das angetriebene Ende (68) des Ventilstiftes (28) einen vergrößerten Kopf (66) aufweist, der mittig in einem passenden Schlitz (78) in dem Zahnstangenteil (76) aufgenommen ist.

3. Spritzgießvorrichtung nach Anspruch 1 oder 2, wobei der verzahnte Abschnitt (80) des Zahnstangenteiles (76) sich teilweise mit dem nach rückwärts erstreckenden Abschnitt (62) der Ventilstifthülse (26) überlappt, wobei der verzahnte Abschnitt (80) des Zahnstangenteiles (76) eine nach einwärts weisende Oberfläche (124, 126) aufweist, die in einem gleitbaren Lagerkontakt gegen eine passende, nach auswärts weisende Oberfläche (120, 122) des sich nach rückwärts erstreckenden Abschnittes (62) der Ventilstifthülse (26) anliegt.

4. Spritzgießvorrichtung nach Anspruch 3, bei der die zueinanderpassenden Oberflächen (124, 126; 120, 122) des verzahnten Abschnittes des Zahnstangenteiles (76) und des sich nach rückwärts erstreckenden Abschnittes (22) der Ventilstifthülse (26) flach sind.

5. Spritzgießvorrichtung nach Anspruch 2, bei der diese zumindest eine, nach einwärts weisende Oberfläche (124, 126) des Zahnstangenteiles (76) und diese zumindest eine nach auswärts weisende Oberfläche (120, 122) des nach rückwärts sich erstreckenden Abschnittes (62) der Ventilstifthülse (26) aneinanderpassen.

6. Spritzgießvorrichtung nach Anspruch 2, bei der die zumindest eine nach einwärts weisende Oberfläche (124, 126) des Zannstangenteiles (76) und die zumindest eine nach auswärts weisende Oberfläche (120, 122) des nach hinten sich erstreckenden Abschnittes (62) der Ventilstifthülse (26) flach sind.

7. Spritzgießvorrichtung nach Anspruch 2, bei der der nach rückwärts sich erstreckende Abschnitt (62) der Ventilstifthülse (26) eine rückseitige, nach außen weisende flache Oberfläche (120) und eine vorderseitige, nach auswärts weisende flache Oberfläche (122) aufweist und das Zahnstangenteil (76) eine rückseitige, nach einwärts weisende flache Oberfläche (124) und eine vorderseitige, nach einwärts weisende flache Oberfläche (126) aufweist, wobei die rückseitige, nach einwärts weisende flache Oberfläche (124) des Zahnstangenteiles (84) gegen die rückseitige, nach auswärts weisende flache Oberfläche (120) der Ventilstifthülse (26) anliegt und die vorderseitige, nach einwärts weisende flache Oberfläche (126) des Zahnstangenteiles (76) gegen die vorderseitige, nach auswärts weisende flache Oberfläche (122) der Ventilstifthülse (26) anliegt, wodurch im wesentlichen sämtliche Seitenkräfte, die durch das Ritzelteil (84) auf das Zahnstangenteil (84) übertragen werden, durch die Ventilstifthülse (26) aufgenommen werden, wenn das Zahnstangenteil (76) und der Ventilstift (28) zwischen der Offen- und Schließstellung hin- und herbewegt werden.

8. Spritzgießvorrichtung nach Anspruch 7, bei der der Ventilstiftkopf (66) eine flache Seite (128) aufweist, die gegen die rückseitige, nach auswärts weisende flache Oberfläche (120) der Ventilstifthülse (26) anliegt, so daß eine Rotation des Ventilstiftes (28) verhindert ist, wenn sich dieser hin- und hergehend bewegt.

9. Spritzgießvorrichtung nach Anspruch 2, bei der das Ritzelteil (84) drehbar an dem Verteiler (14) gelagert ist.

10. Spritzgießvorrichtung nach Anspruch 2, bei der die Betätigungseinrichtung einen Kolben (96) enthält der sich in einem Zylinder (100) hin- und hergehend bewegt, wobei der Kolben (96) mit dem Ritzelteil (84) durch eine Verbindungsstange (94) verbunden ist.

## Revendications

1. Dispositif de moulage par injection à obturateur d'entrée et à canal principal à chaud comportant une buse d'injection chauffée (18) qui est positionnée sur une plaque creuse (32) et fixée à un distributeur chauffé (14), une aiguille d'obturateur allongée à commande pneumatique (28) qui a un mouvement longitudinal alternatif entre une position ouverte rétractée et une position avant fermée dans un alésage central (16) d'une buse d'injection (18) qui est dans l'alignement d'une entrée (20) s'étendant au travers d'une plaque à cavité (32) vers une cavité (22), l'aiguille d'obturateur ayant une extrémité pilotée (68) et une extrémité de pointe (70) qui repose dans l'entrée (20) en position fermée, un passage de masse en fusion (10) pour convoyer la masse en fusion sous pression depuis une entrée (12) dans le distributeur (14) vers l'entrée (20) qui passe au travers du distributeur (14) et le long de l'aiguille d'obturateur (28) dans l'alésage central (16) de la buse d'injection (18), et un fourreau d'aiguille d'obturateur (26) qui est positionne dans la buse d'injection (18) avec une partie s'étendant vers l'arrière (62) qui se prolonge dans le distributeur (14), le fourreau d'aiguille d'obturateur (26) comportant un alésage pour aiguille de distributeur (60) s'étendant au travers de celui-ci en alignement avec l'alésage central (16) de la buse d'injection (18) pour recevoir l'aiguille d'obturateur (28) au travers de celui-ci en empêchant une fuite substantielle de la masse en fusion sous pression autour de l'aiguille d'obturateur (28) à mouvement alternatif,
caractérisé en ce que :
(a) un élément crémaillère (76) glisse longitudinalement dans une ouverture radiale (74) du distributeur (14) pour s'engager sur l'extrémité pilotée (68) de l'aiguille d'obturateur (28), l'élément crémaillère (76) comportant une partie dentée (80) avec une rangée longitudinale de dents (82) qui se présente vers l'extérieur dans l'ouverture radiale (74);
(b) un élément lever à pignon (84) a une pluralité de dents (88) qui s'engagent dans les dents de l'élément crémaillère (76) et,
(c) des moyens d'activation pneumatique à double action (96) sont connectés de manière à faire pivoter l'élément levier à pignon (84) d'un angle prédéterminé selon un cycle prédéterminé par lequel l'élément crémaillère (76) et l'aiguille d'obturateur (28) ont un mouvement alternatif longitudinal entre les positions d'ouverture et de fermeture,
l'élément crémaillère (76) ayant une surface interne (108, 124, 126) qui s'appuie contre une surface correspondante (110) de l'ouverture radiale (74) du distributeur (14) ou contre une surface correspondante (120, 122) ce la partie arrière du fourreau d'aiguille d'obturateur (28) et absorbe les forces latérales en provenance de l'élément pignon (84) alors que l'élément crémaillère (76) et l'aiguille d'obturateur (28) sont en mouvement alternatif entre les position d'ouverture et de fermeture.

2. Dispositif de moulage par injection comme revendiqué dans la revendication 1 dans lequel l'extrémité pilotée (68) de l'aiguille d'obturateur (28) comporte une tête élargie (66) qui est reçue au centre d'une encoche correspondante (78) dans l'élément crémaillère (76).

3. Dispositif de moulage par injection comme revendiqué dans la revendication 1 ou 2 dans lequel la partie dentée (80) de l'élément crémaillère (76) recouvre partiellement la partie s'étendant vers l'arrière (62) du fourreau d'aiguille d'obturateur (26), la partie dentée (80) de l'élément crémaillère (76) ayant une surface dirigée vers l'intérieur (124, 126) qui est en portée glissante contre une surface correspondante orientée vers l'extérieur (120, 122) de la partie s'étendant vers l'arrière (62) du fourreau d'aiguille d'obturateur.

4. Dispositif de moulage par injection comme revendiqué dans la revendication 3 dans lequel les surfaces correspondantes (124, 126; 120, 122) de la partie dentée de l'élément crémaillère (76) et de la partie s'étendant vers l'arrière du fourreau d'aiguille d'obturateur (26) sont planes.

5. Dispositif de moulage par injection comme revendiqué dans la revendication 2 dans lequel ladite au moins une surface dirigée vers l'intérieur (124, 126) de l'élément crémaillère (76) et ladite au moins une surface dirigée vers l'extérieur (120, 122) de la partie s'étendant vers l'arrière (62) du fourreau d'aiguille d'obturateur (26) sont en correspondance l'une à l'autre.

6. Dispositif de moulage par injection comme revendiqué dans la revendication 2 dans lequel ladite au moins une surface dirigée vers l'intérieur (124, 126) de l'élément crémaillère (76) et ladite au moins une surface dirigée vers l'extérieur (120, 122) de la partie s'étendant vers l'arrière (62) du fourreau d'aiguille d'obturateur (26) sont planes.

7. Dispositif de moulage par injection comme revendiqué dans la revendication 2 dans lequel la partie s'étendant vers l'arrière (62) du fourreau d'aiguille d'obturateur (26) comporte une surface plane arrière dirigée vers l'extérieur (120) et une surface plane avant dirigée vers l'extérieur (122) et l'élément crémaillère (76) comporte une surface plane arrière dirigée vers l'intérieur (124) et une surface plane avant (26) dirigée vers l'intérieur, la surface plane arrière dirigée vers l'intérieur (124) de l'élément crémaillère (76) s'appuyant contre la surface plane arrière dirigé vers l'extérieur (120) du fourreau d'aiguille d'obturateur (26) et la surface plane avant dirigée vers l'intérieur (126) de l'élémentcrémaillère (76) s'appuyant contre la surface plane avant dirigée vers l'extérieur (122) du fourreau d'aiguille d'obturateur (26), par quoi à peu près toutes les forces latérales essentiellement appliquées par l'élément pignon (84) à l'élément crémaillère (76) sont absorbées par le fourreau d'aiguille d'obturateur (26) tandis que l'élément crémaillère (76) et l'aiguille d'obturateur (28) agissent en mouvement alternatif entre la position d'ouverture et la position de fermeture.

8. Dispositif de moulage par injection comme revendiqué dans la revendication 7 dans lequel la tête d'aiguille d'obturateur (66) comporte une face plate (128) qui s'appuie contre une surface plane arrière dirigée vers l'extérieur (120) du fourreau d'aiguille d'obturateur (26), ceci empêchant la rotation de l'aiguille d'obturateur au cours de son mouvement alternatif.

9. Dispositif de moulage par injection comme revendiqué dans la revendication 2 dans lequel élément pignon (84) est monté pivotant sur le distributeur (14).

10. Dispositif de moulage par injection comme revendiqué dans la revendication 2 dans lequel les moyens d'activation comprennent un piston (96) qui a un mouvement alternatif dans un cylindre (100), le piston étant relié à un élément pignon (84) par une belle (94).
